# EUROPÄISCHE PATENTSCHRIFT

(11) **EP 4 551 997 B1**
(45) Veröffentlichungstag und Bekanntmachung des Hinweises auf die Patenterteilung: **18.11.2026**
(21) Anmeldenummer: 23730096.7
(22) Anmeldetag: 01.06.2023
(51) Int. Cl.: G05B 19/042

(54) **SMART-CONNECTOR-EINHEIT UND VERFAHREN FÜR EIN IO-LINK-SYSTEM**
SMART CONNECTOR UNIT AND METHOD FOR AN IO-LINK SYSTEM
UNITÉ CONNECTEUR INTELLIGENT ET PROCÉDÉ POUR UN SYSTÈME DE LIAISON E/S

(30) Priorität: 05.07.2022 DE 102022116648
(43) Veröffentlichungstag der Anmeldung: 14.05.2025
(73) Patentinhaber: Turck Holding GmbH, 58553 Halver (DE)
(72) Erfinder: SCHWAGMANN, Hermann, 32760 Detmold (DE); STRUNKMANN, Peter, 32760 Detmold (DE)
(74) Vertreter: DTS Patent- und Rechtsanwälte PartmbB
(86) Internationale Anmeldenummer: PCT/EP2023/064630
(87) Internationale Veröffentlichungsnummer: WO 2024/008366

(56) Entgegenhaltungen:
- DE-A1- 102010 025 515
- DE-B3- 102020 134 409

## Beschreibung

Die Erfindung betrifft eine Smart-Connector-Einheit (SCE) nach dem Oberbegriff des Anspruch 1 und ein Verfahren zur bidirektionalen Datenübertragung zwischen einem IO-Link Device und einem IO-Link Master über mindestens eine Smart-Connector-Einheit (SCE) nach dem Oberbegriff des Anspruch 4.

Der in der Norm IEC 61131-9 normierte IO-Link ist ein Kommunikationssystem zur Anbindung von intelligenten IO-Link-Devices (IO-Link-Geräten), wie Sensoren und Aktoren an eine Steuerung. Dieses Kommunikationssystem ist im Unterschied zu einem Multidrop-System, wie einem Feldbus-System, ein Point-to-Point-System und wird auch Single-drop digital communication interface for small sensors and actuators (SDCI) genannt.

Der vorgenannte Standard definiert sowohl die elektrischen Anschlussdaten als auch ein digitales Kommunikationsprotokoll, über das die Sensoren und Aktoren mit der Steuerung, insbesondere über die IO-Link-Master, in Datenaustausch treten.

Hierbei dient der regelmäßig mit mehreren IO-Link-Devices (IO-Link-Gerät) verbundene IO-Link-Master als organisierende Schnittstelle zu einer zentralen Steuerungsebene, wie einer speicherprogrammierbaren Steuerung (SPS).

Die Funktion eines IO-Link-Devices umfasst neben einer Sensor- oder Prozessdateneinheit beispielsweise das Verarbeiten und zur Verfügung stellen einer Seriennummer oder von Parameterdaten, wie beispielsweise die Empfindlichkeiten, die Schaltverzögerungen oder eine Kennlinie. Diese können über das IO-Link-Protokoll ausgelesen, beschrieben bzw. gespeichert werden, wobei Parameter organisiert durch den IO-Link-Master anpassbar sind. Diese Konfiguration der Parameter eines IO-Link-Devices erfolgt mit Hilfe von Beschreibungsseiten, auch IODD (IO Device Description) genannt.

Neben der (ggf. automatischen) Parametrisierung, können beispielsweise im Betrieb einer Anlage Steuerbefehle übermittelt, Anlagenzustände diagnostiziert und Messwerte übertragen werden.

Aus den Druckschriften EP2211464A1, DE 10 2012 009 494 A1 und DE 10 2014 106 752 A1 sind verschiedene IO-Link Kommunikationsschaltungen und IO-Link Kommunikationsverfahren bekannt. Bei IO-Link-Systemen besteht bei einer Kommunikation über eine längere Leitungsstrecke das Problem, dass das Signal schwächer wird. IO-Link erlaubt gemäß Spezifikation eine Kabellänge zwischen Master und Device von max. 20 m.

Zur Signalverbesserung bei großen Leitungslängen in der Feldbustechnologie ist aus der Druckschrift DE 10 2007 032 845 A1 ein Bus-Repeater und ein Verfahren zur Ankopplung zweier Bus-Segmente über einen Bus- Repeater allgemein für Feldbusse bekannt. Weiterhin ist aus der DE19710137A1 ein Verfahren zur Erweiterung eines ASi Bussystems bekannt.

Bei Anwendungen im Ex-Schutzbereich wird zudem eine galvanische Trennung gefordert, so dass beispielsweise induktive oder optische Koppler zum Einsatz kommen. Koppler sind allerdings bzgl. der Anforderung an die Latenzzeit problematisch, die gemäß IO-Link Spezifikation einzuhalten ist. IO-Link ist ein Master-Slave-System, bei dem der IO-Link-Master einen Request an das IO-Link-Device sendet, welches in einer definierten Response-Zeit herauf antwortet.

Die Latenzzeit zwischen Request und Response ist standardgemäß auf maximal 10 tBit begrenzt, wobei die Spezifikation keine Überschreitung dieser Zeitvorgabe zulässt. Dies beträgt bei 38.4 kBaud 260 µs und bei 230.4 kBaud nur 43 µs. Aufgrund der Verwendung systemimmanenter Fehlerwiederholungen als Latenzpuffer, kann dies zum Ausfall von vollständigen Protokollblöcken führen. Ein zusätzlicher Nachteil ist die bedeutsame Verringerung der Kommunikationsgeschwindigkeit.

Daher wird in der DE 10 2016 217 706 B4 vorgeschlagen, in einem IO-Link-System zwischen dem Master und einem Device eine Zwischeneinheit als eine generische Master-Device-Einheit vorzusehen, die eine Datenspiegelung vornimmt, um lange Kabelstrecken übertragungssicher auszubauen. Hierbei kann gemäß der DE 10 2016 217 706 B4 vorgesehen werden, die Zwischeneinheit mit einem Erweiterungsmodul zu ergänzen, auf dem Daten gespeichert und/oder auf ein externes Gerät übertragen und dort angezeigt werden können.

Nachteilig an dieser grundsätzlich guten Lösung nach der DE 10 2016 217 706 B4 ist, dass die Einflüsse auf eine sehr lange Leitungsstrecke unbekannt sind und somit Defekte und Störquellen entlang eines physikalischen Leitungsabschnitts nicht differenziert erkannt werden können.

Aus der DE 10 2020 134 409 B3 ist eine Zwischeneinheit für ein Feldgerät mit einem Energiespeicher bekannt. Die DE 10 2010 025 515 A1 beschreibt ein Kommunikationssystem zum Verbinden von Feldgeräten.

Aufgabe der Erfindung ist es, eine Vorrichtung und ein Verfahren anzugeben, die eine gegenüber dem vorbekannten Stand der Technik verbessertes IO-Link-System und IO-Link-Verfahren vorzustellen, welche eine verbesserte Leitungsüberwachung ermöglichen.

Gelöst wird diese Aufgabe durch eine Smart-Connector-Einheit zur Nutzung als Verbindungelement oder als Verbindungsleitung eines IO-Link-Systems auf der Datenstrecke zwischen einem IO-Link-Master und einem IO-Link-Device. Dieser IO-Link-Master und/oder das IO-Link-Device des standardisierten IO-Link-Systems werden nachstehend auch vereinfachend nur "Master" oder "Device" genannt. Weiterhin wird die Aufgabe durch ein entsprechendes Verfahren unter Verwendung der Smart-Connector-Einheit gelöst.

Die Smart-Connector-Einheit umfasset hierbei:
eine erste Verbindungseinheit und eine zweite Verbindungseinheit, einen Smart-Master und ein Smart-Device, einen Mikroprozessor, einen Datenspeicher und eine Schnittstelle, die zum Senden und Empfangen von Daten dient. Der Mikroprozessor ist ausgebildet, Betriebsdaten, die in der Form von zyklischen Prozessdaten oder in der Form von Diagnose- oder Eventdaten (ISDU, DPP) vorliegen, standardkonform gemäß IO-Link bedarfsweise aufzubereiten und mittels der Schnittstelle zwischen dem Smart-Master und dem Smart-Device auszutauschen. Somit können mindestens die vom Master oder dem Device erhaltenen Betriebsdaten durch die Smart-Connector-Einheit gespiegelt weitergeleitet werden.

Weiterhin ist eine Erfassungseinheit vorgesehen, die als weitere Datenquelle mit dem Mikroprozessor verbunden ist. Der Mikroprozessor ist weiterhin ausgebildet, Erfassungsdaten gesendet von der Erfassungseinheit zu empfangen, standardkonform umzuwandeln und mindestens einen Teil der Erfassungsdaten im IO-Link-Standard in die Betriebsdaten einzufügen und diese mit Erfassungsdaten ergänzten Betriebsdaten im IO-Link-Standard an das Smart-Device weiterzuleiten. Das Smart-Device ist ausgebildet, diese angereicherten Betriebsdaten auf Anfrage durch einen angeschlossenen Master oder einen angeschlossenen, weiteren Smart-Master weiterzuleiten.

Organisiert durch den Mikroprozessor oder ein anderes geeignetes elektronisches Bauteil, werden Betriebsdaten oder Erfassungsdaten bedarfsweise mindestens teilweise und mindestens zeitweise in einem Speicherelement gespeichert.

Somit ist der Smart-Master insbesondere eine konzeptionelle Zuordnung des Funktionsumfangs der Hardware, vorrangig des Mikroprozessors, der Smart-Connector-Einheit auf analoge Funktionen eines IO-Link Masters. Diese bestehen insbesondere in Folgendem:
▪ eine IO-Link konforme oder analoge Protokoll- und/oder Datenaufbereitung der Betriebsdaten oder Erfassungsdaten und/oder
▪ eine IO-Link konforme oder analoge Weiterleitung dieser aufbereiteten Betriebs- oder Erfassungsdaten.

In analoger Weise ist das Smart-Device somit insbesondere ein zu einem IO-Link-Device konzeptioneller (analoger) Anschluss auf der Smart-Device-Seite der Smart-Connector-Einheit, vorrangig des Mikroprozessors.

Vorliegend meint "Betriebsdaten" solche Daten, die zwischen einem Device und einem Master auch in Abwesenheit und insbesondere ohne ergänzende Erfassungsdaten ausgetauscht werden. Unterschiedlich hierzu meint "ergänzte oder angereicherte Betriebsdaten" solche Daten, in die mindestens einmalig, das heißt von einer Erfassungseinheit kommend, ein Anteil an Erfassungsdaten eingefügt wurde. Weiterhin sind unter Erfassungsdaten alle solchen Daten oder Datenteile zu verstehen, die ganz oder in Teilen von einer Erfassungseinheit übermittelt wurden, insbesondere an den Mikroprozessor übermittelt wurden.

Hier ist auch ein besonderer Vorteil der Smart-Connector-Einheit augenfällig, dass der standardgemäße IO-Link-Master und auch das IO-Link-Device, keinerlei Anpassung bedarf, weil der IO-Link-Master ein virtuelles IO-Link-Device sieht und analog das IO-Link Device von einem virtuellen IO-Link-Master angesprochen wird.

Erfindungsgemäß ist ein Mikrochip vorgesehen, der mit dem Mikroprozessor verbunden ist und mittels welchem gesteuert durch den Mikroprozessor mindestens teilweise die Aufbereitung und/oder standardkonforme Einfügung von Erfassungsdaten in Betriebsdaten durchführbar ist. Dabei kann der Mikrochip und/oder der Mikroprozessor ausgebildet sein, um weitere Verarbeitungsschritte für die Erfassungsdaten vorzunehmen, wie insbesondere eine Datenkomprimierung und/oder Datenselektion, um den Datenumfang möglichst gering zu halten.

Gemäß einer vorteilhaften Ausführungsform ist die Erfassungseinheit
- ein Extern-Sensor, das heißt, er dient zur Ermittlung eines externen, chemischphysikalischen Messwerts und/oder einer Größe, wie beispielsweise Temperatur, Druck, Vibration, Neigung, Feuchte oder magnetische Feldstärke; und/oder
- ein Connector-Sensor, das heißt, er dient zur Ermittlung eines für die Smart-Connector-Einheit oder eines zugehörigen Bauteils internen Messwertes und/oder Größe, wie beispielsweise elektrische Spannung, die Stromstärke, der Stromfluss, magnetische Feldstärke, Datenvolumen, Datenfrequenz, Datengeschwindigkeit und/oder
- eine Übertragungseinheit zum Datenaustausch mit einer externen Empfangseinheit oder Empfangsgerätes, wie beispielsweise ein Smartphone, ein Tablet-Computer, ein Laptop, eine Serviceeinheit, ein Anzeigemonitor etc., wobei der Datenaustausch insbesondere über eine Funkkommunikation also drahtlos erfolgen kann. Hierbei kann jedes bekannte Funkprotokoll und Datenstandard verwendet werden, insbesondere WLAN, WiFi, Bluetooth, UMTS, LTE, 3G, 4G, 5G-Standard.

Bei einer Ausführungsform kann alternativ oder zusätzlich die Smart-Connector-Einheit auch teilweise oder vollständig die Aufgabe des physikalischen (standardisierten) IO-Link-Devices in der Punkt-zu-Punkt-Kommunikation übernehmen. Dies heißt insbesondere, dass keine direkte oder mittelbare Verbindung mit einem physikalischen IO-Link Device besteht, das Smart-Device somit in der Verbindungsleitung zum IO-Link-Master endständig ist.

Bei einer weiteren vorteilhaften Ausführungsform ist die Smart-Connector-Einheit ein kombiniertes Smart-Connector-Element, welches gebildet ist aus sich selbst, allen sonstigen Smart-Connector-Einheiten und dem physikalischen IO-Link-Device oder der Smart-Connector-Einheit, welches am Ende der Datenverbindung als IO-link-Device fungiert. Hierbei meint "alle sonstigen Smart-Connector-Einheiten" alle sonstigen Smart-Connector-Einheiten, mit denen die jeweilige Smart-Connector-Einheit auf der Teillänge der Datenstrecke von sich selbst bis zum realen, physikalischen IO-Link-Device oder der als physikalischen IO-Link-Device fungierende Smart-Connector-Einheit verbunden ist.

Ist beispielsweise auf der Datenstrecke vom einem als einfacher Temperatursensor ausgebildeten physikalische IO-Link Device zum Master erst eine erfindungsgemäße Smart-Connector-Einheit als Drucksensor und direkt benachbart zum Master eine Smart-Connector-Einheit mit einer weiteren Erfassungseinheit als Connect-Sensor vorgesehen, der die elektrische Spannung erfasst. So erkennt der physikalische IO-Link-Master in dem benachbarten und von ihm angefragten Smart-Device der Smart-Connector-Einheit einen (virtuellen) kombinierten Temperatur-Druck-Spannungssensor als virtuelles IO-Link-Device.

In analoger Weise erkennt der mittlere Smart-Master in dem benachbarten und von ihm anzufragenden Smart-Device ein (virtuelles) kombiniertes Temperatur-Druck-Gerät als virtuelles IO-Link-Device.

Weil bei der Konfiguration und/oder Systeminitialisierung des jeweiligen IO-Link-Systems oder IO-Link-Systemabschnittes jede Smart-Connector-Einheit in Abhängigkeit zu den jeweils in Richtung des physikalischen IO-Link-Devices, als vollständiges, virtuelles Device definiert und beschrieben ist, kann zu jeder Zeit ein standardkonformer Aufruf und Weiterleitung von Betriebsdaten erfolgen.

Von der Erfindung ist weiterhin ein Verfahren zur bidirektionalen Datenübertragung über eine Datenstrecke zwischen einem realen, physikalischen IO-Link Device und einem realen, physikalischen IO-Link Master nach dem IO-Link-Standard über mindestens eine Smart-Connector-Einheit umfasst. Hierbei sind das Device und der Master über ein mindestens 3-Leiterkabel miteinander verbunden, welches mindestens eine Signalleitung C/Q und mindestens zwei Versorgungsleitungen L+, L- aufweist. Die mindestens eine Smart-Connector-Einheit (SCE) weist jeweils einen Mikroprozessor mit einer Schnittstelle auf, die zum Senden und Empfangen von Daten dient, die insbesondere eine UART-Schnittstelle sein kann, wobei die Datenübertragung entlang der Datenstrecke nach dem Master-Slave-Prinzip erfolgt, und im IO-Link-Standard definiert ist.

Hierbei erfolgen die folgende Verfahrensschritte:
- im Betrieb der zyklische Austausch der Betriebsdaten in Form von Prozesswerten zwischen dem Smart-Master der Smart-Connector-Einheit und dem IO-Link-Device und ständiger konsistenter Abgleich der Betriebsdaten in Form von Prozesswerten zwischen mindestens einem (n-ten) Smart-Master und einem (n+1ten) Smart-Device einer benachbarten beziehungsweise dem (n-ten) Smart-Device derselben Smart-Connector-Einheit,
- bei einem Eventereignis die Abfrage von Betriebsdaten in Form von Diagnosedaten vom IO-Link Device durch den Smart-Master einer Smart-Connector-Einheit und Übertragung der Betriebsdaten in Form von Diagnosedaten an das Smart-Device derselben Smart-Connector-Einheit,
- im Betrieb zyklischer Austausch der Betriebsdaten in Form von Prozesswerten zwischen dem (n-ten) Smart-Device der Smart-Connector-Einheit und dem IO-Link Master oder einem weiteren, benachbarten (n+1ten) Smart-Master und
- bei einem Eventereignis die Abfrage von Betriebsdaten in Form von Diagnosedaten vom (n-ten) Smart-Device einer Smart-Connector-Einheit durch den IO-Link Master oder einem weiteren, benachbarten (n+1ten) Smart-Master,
wobei die mindestens eine Smart-Connector-Einheit (SCE) nach einem der Ausführungsformen und Varianten ausgebildet ist, wie vorstehend ausgeführt.

Bei einem weiter verbesserten Verfahren kann vorgesehen werden, dass ein oder mehrere der folgenden Verfahrensschritte erfolgen,
- Erfassung von Erfassungsdaten durch die Erfassungseinheit und Weiterleitung an den Mikroprozessor und/oder Speicherung in einem angeschlossenen Datenspeicher,
- standardkonformes Einfügen von mindestens einem Teil der Erfassungsdaten in die Betriebsdaten,
- Übertragung der mit eingefügten Erfassungsdaten angereicherten Betriebsdaten an das (n-te) Smart-Device durch den (n-ten) Smart-Master derselben Smart-Connector-Einheit und
- Übertragung der mit Erfassungsdaten angereicherten Betriebsdaten an entweder den IO-Link-Master oder einen benachbarten (n+1ten) Smart-Master einer weiteren Smart-Connector-Einheit durch das (n-te) Smart-Device.

Die Anreicherung von Erfassungsdaten in den Betriebsdaten soll nicht einschränkend verstanden werden, so dass auch das Einfügen von standardkonformen Leer- oder Nullstellen in den zugehörigen Protokolleinträgen und/oder Frames als Einfügung und Übermittlung von Erfassungsdaten zu verstehen ist.

Weiterhin wird durchgehend von Erfassungsdaten gesprochen, auch wenn diese ggf. konvergiert, digitalisiert, komprimiert oder in sonstiger Weise aufbereitet werden, ausgehend von dem erstmalig ermittelten Messwert. Somit soll unter "Erfassungsdaten" auch jede Form oder Anteil der Aufbereitung der Daten verstanden werden, die von einer Erfassungseinheit innerhalb oder zu der Smart-Connector-Einheit gesendet oder durchgeleitet werden.

Grundsätzlich kann die Datenaufbereitung irgendwo in der Smart-Connector-Einheit erfolgen, es ist aber vorteilhaft, wenn der Mikroprozessor im Smart-Master vorgesehen oder diesem zugeordnet ist, weil der Smart-Master für die Organisation der Aufbereitung, (temporären) Speicherung und Übermittlung von Betriebsdaten funktional verantwortlich ist. Alternativ kann der Mikroprozessor den Übergang zwischen einem Smart-Master und einem Smart-Device darstellen.

Es kann eine Verbesserung des Verfahrens darin bestehen, dass mindestens einer der folgenden Verfahrensschritten erfolgt, insbesondere alle erfolgen:
A. Konfiguration des mindestens einen Smart-Masters für einen zyklischen oder eventabhängigen Betriebsdatenabruf.
B. Bei der Systeminitialisierung Abfrage der Konfigurations-Parameterliste (Parameterpage)
   - vom IO-Link Device durch den benachbarten (verbundenen) Smart-Master und Übertragung der Konfigurations-Parameterliste an mindestens ein Smart-Device und/oder
   - vom Smart-Device durch einen weiteren, benachbarten Smart-Master einer benachbarten Smart-Connector-Einheit und Übertragung der Konfigurations-Parameterliste an das zugehörige Smart-Device derselben (benachbarten) Smart-Connector-Einheit,
   - mehrfache Anfrage nach der Konfigurations-Parameterliste bei einem Smart-Device durch den IO-Link Master oder einen Smart-Master, bis diese Parameterliste im Smart-Device bzw. in jedem Smart-Device einer jeden Smart-Connector-Einheit zur Verfügung steht.

Vorteilhafterweise kann vorgesehen werden, dass der mindestens eine Smart-Master und das mindestens eine Smart-Device in einem Dualport-Mikroprozessor (DPR, DPRAM) realisiert sind. Dieser ermöglicht, dass von beiden Ports (Seiten) des Smart-Devices und des Smart-Masters Lese- und/oder Schreibzugriffe parallel erfolgen können.

Eine weitere Verbesserung kann darin bestehen, dass der mindestens eine Smart-Master und das mindestens eine Smart-Device als separate Einheiten ausgeführt sind, die über eine Standardschnittstelle (Ethernet, SPI, I2C) oder über eine proprietäre Schnittstelle miteinander Daten austauschen.

Vorliegend wird mittels der Erfassungsdaten insbesondere Folgendes vorgenommen:
S0: erweitern der Betriebsdaten in Form von Prozessdaten,
S1: Ergänzen des ISDU-Index (indexed service data unit), zur Abfrage von (angereicherten) Betriebsdaten in Form von Parameterdaten durch eine übergeordnete Steuerung/-seinheit;
S2: Trigger im Fall eines Events und der Übermittlung von Betriebsdaten in Form von Eventdaten,
S3: Ergänzen der Direct Parameter Page (DPP) mit dem Vorteil, dass das Smart-Device als IO-Link-Device erkannt wird, bis auf die ergänzten Daten. Hierbei müssen die ergänzten Daten nicht in der IODD aufgeführt und beschrieben sein;
   und/oder
S4: erweitern der M-Sequence, wobei hierzu im Regelfall eine Erweiterung des IO-Link-Masters erforderlich ist.

Schließlich ist bei einer Ausführungsform des Verfahrens alternativ oder zusätzlich vorgesehen, dass die Smart-Connector-Einheit verwendet wird, um teilweise oder vollständig die Aufgabe des physikalischen (standardisierten) IO-Link-Devices in der Punkt-zu-Punkt-Kommunikation übernehmen, wenn keine direkte oder mittelbare Verbindung mit einem physikalischen IO-Link Device besteht, das Smart-Device somit in der Verbindungsleitung zum physikalischen (realen) IO-Link-Master endständig angeordnet ist.

Hierbei wird, wie vorstehend beschrieben, mittels der Erfassungsdaten eine oder mehrere Ergänzungen (Anreicherungen) der Betriebsdaten vorgenommen, indem
- (externe) physikalischen Messwerte (Größen),
- (interne) Messwerte der Smart-Connector-Einheit (SCE) und/oder
- Daten von einer Übertragungseinheit
in erhaltene Betriebsdaten eingefügt werden. Diese erhaltenen Betriebsdaten können bereits (teilweise) angereichert sein, wenn diese von einem Smart-Device übergeben wurden, wie insbesondere im Zusammenhang mit dem kombinierten Smart-Connector-Element beschrieben wurde.

Ein wesentlicher Vorteil dieser Erfindung ist insbesondere darin zu sehen, dass ein Smart-Device einer Smart-Connector-Einheit (SCE) standardkonform konfiguriert wird, analog einem realen IO-Link Device. Dabei wird die Funktion einer in der Smart-Connector-Einheit vorgesehen Erfassungseinheit und die hiermit verbunden und zu übermittelnden Erfassungsdaten bei der Konfiguration und Systeminitialisierung ergänzend standardkonform konfiguriert und definiert.

Ein weiterer Vorteil kann darin gesehen werden, dass der IO-Link-Master, der eigentlich als Point-to-Point-Verbindung arbeitet, mit einer Mehrzahl von beispielsweise als Sensoren ausgebildeten Erfassungseinheiten in einer Datenstrecke verbunden werden kann. Dabei kann diese Verbindung erfolgen, ohne den physikalischen IO-Link-Master oder das physikalische IO-Link-Device in der Standardsoftware und/oder den elektronischen Bauteilen verändern zu müssen. Somit können auch bestehende IO-Link-Systeme leicht erweitert werden.

Nachfolgend wird die Erfindung anhand von Ausführungsbeispielen näher erläutert. Es zeigen
- Fig. 1: eine schematische Smart-Connector-Einheit in einer ersten Ausführungsform, bei der das Smart-Device und der Smart-Master jeweils in einem Steckerkörper untergebracht sind,
- Fig. 2: eine Kommunikationsstrecke mit mehreren Smart-Connector Einheiten (SEC) bzw. kombinierten Smart-Connector-Elementen aus insgesamt drei Smart-Connector-Einheiten (SCE),
- Fig. 3: eine Kommunikationsstrecke mit einer weiteren Ausführungsform einer Smart-Connector-Einheit (SCE) mit einem mikroprozessorgesteuertem Datenintegrator und
- Fig. 4: eine zur Fig. 2 ähnliche, alternative Ausführungsform, bei der ein Schaltelement in eine IO-C/Q Datenleitung vorgesehen ist.

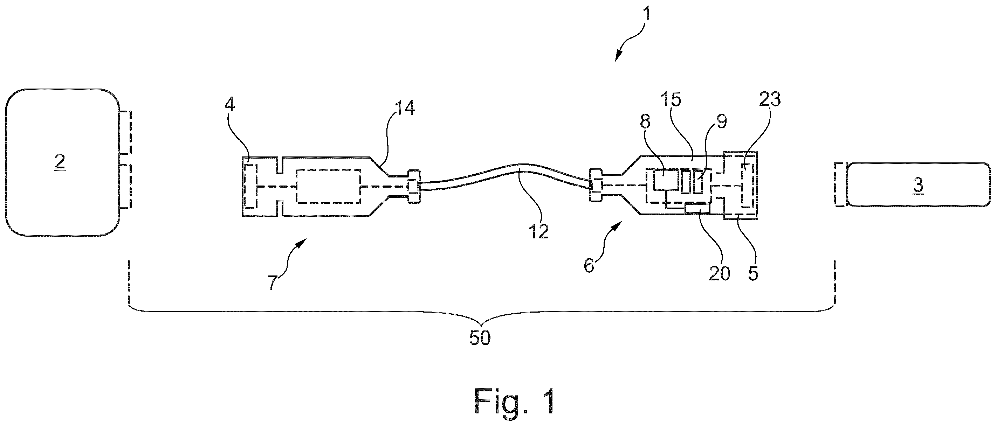

Die Figur 1 zeigt schematisch eine Smart-Connector-Einheit 1, deren beide Steckerkörper 14, 15 über ein Verbindungskabel 12 verbunden sind. Das Verbindungskabel 12 ist ein nach dem IO-Link standardisiertes 3-Leiterkabel, das als eine Signalleitung C/Q und zwei Versorgungsleitungen L+, L- ausgebildet ist.

Beide Steckerkörper 14, 15 weisen jeweils eine Verbindungseinheit 4, 5 auf, die als Steckverbinder oder Steckerbuche ausgebildet sind, beispielsweise nach DIN 61131, und in bekannter Weise mit dem IO-Link-Master 2 oder dem IO-Link-Device 3 verbindbar sind. Mit der geschweiften Klammer und dem Bezugszeichen 50 ist die Datenstrecke zwischen Master und Device skizzenhaft gekennzeichnet.

Bei dem gezeigten Ausführungsbeispiel ist im linken Steckerkörper 14 ein Smart-Device 7 angeordnet und in dem rechten Steckerkörper 15 ist der Smart-Master 6 angeordnet. Der Smart-Master 6 im rechten Steckerkörper 15 ist vorliegend ein Softwarestack, der in einem Mikroprozessor 8 über einer der UART-Schnittstellen des Mikroprozessors 8 und einem Treiberbaustein, wie beispielsweise einem Pegelwandler, mit der C/Q-Leitung des Steckerkörpers 15 über den Steckverbinder 23 zum IO-Link-Device 3 verbunden. In dem gezeigten Beispiel sind auf einer gemeinsamen Leiterplatine der vorgenannt Mikroprozessor 8 und ein verbundener Datenspeicher 9 angeordnet. Weiterhin ist auf dem Steckerkopf 15 ein Temperatursensor als Erfassungseinheit 20 angeordnet, der datenleitend mit dem Mikroprozessor 8 verbunden ist, so dass Erfassungsdaten an den Mikroprozessor 8 geleitet werden können und dort in der beschriebenen Weise aufbereitet und in die Betriebsdaten eingefügt werden können. Diese angereicherten Betriebsdaten werden im Smart-Device 7 des linken Steckerkörpers 14 in bekannter Weise abgelegt, so dass diese Betriebsdaten bei einer Anfrage vom verbundenen IO-Link-Master 2 übergeben werden können.

Sowohl das Smart-Device 7 des Steckerköpers 14 als auch der Smart-Master 6 des Steckerkörpers 15, müssen in einem gewissen Umfang eine Programmanpassung vornehmen, wie beispielsweise eine angepasste Frequenz oder Baudrat. Die im IO-Link Devices 3 gespeicherten Betriebsdaten sind in Datenpages abgespeichert. Der Smart-Master 6 schreibt die Betriebsdaten, die er vom IO-Link Device D erhält, an die entsprechende, standardgemäße Speicherstelle im Smart-Device 7.

Der interne Übertrag von (Betriebs-)Daten in der SCE 1 zwischen Smart-Master 6 und Smart-Device 7 stellt eine Art Spiegelung der Daten dar, mit gegebenenfalls erfolgter Anreicherung von Erfassungsdaten. Diese interne Übertragung kann über ein proprietäres Protokoll oder einen bekannten Datenstandard erfolgen, wie Ethernet, SPI, I2C etc., wobei diese Übertragung auch innerhalb einer geschlossenen Einheit oder über eine galvanische Entkopplung stattfinden kann.

Bei nicht dargestellten Ausführungsformen ist der Smart-Master 6 und das Smart-Device 7 in demselben Steckerkörper 14 oder 15 untergebracht oder in einem eigenständigen Gehäuse, welches über zwei Steckverbinder ohne zusätzliche elektronische Elemente mit einem benachbarten Master 2 oder Device 3 verbindbar ist.

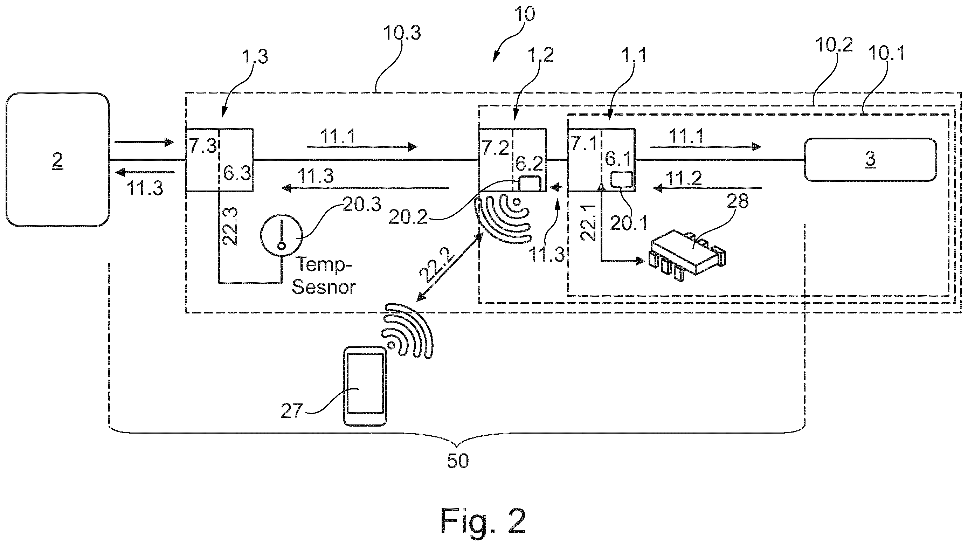

Fig. 2 zeigt eine Datenstrecke 50 zwischen einem Master 2 und deinem Device 3, wobei entlang der Datenstrecke 50 in derselben Übertragungsleitung drei unterschiedliche SCE 1.1, 1.2 und 1.3 angeordnet sind, über die jeweils Erfassungsdaten 22.1, 22.2 und 22.3 zu den Betriebsdaten 11 hinzugefügt (angereichert) werden können. Das IO-Link-Device 3 ist in dem gezeigten Beispiel ein induktiver Näherungssensor.

Die erste SCE 1.1, benachbart zum physikalischen (realen) IO-Link-Device 3, ist als SCE-Speicher 1.1 ausgebildet und umfasst einen organisierenden Mikroprozessor und/oder Mikrochip (nicht dargestellt) und einen Datenspeicher 28, in dem Messwerte des Devices 3 temporär gespeichert werden, um beispielsweise im Schadensfall eine vollständige Historie des Aktorverhaltens oder der Sensormesswerte zur Verfügung zu haben. In dem gezeigten Ausführungsbeispiel ist der Datenspeicher 28 (ROM) als separate, verbundene Einheit dargestellt, was aber nicht einschränkend zu verstehen ist, dieser könnte auch in der SCE 1.1 integriert sein. Als nicht dargestellte Erfassungseinheit dient der genannte Mikroprozessor oder die Einheit aus Mikroprozessor und Datenspeicher 28, wobei der Mikroprozessor angefragte Daten oder Datenteile aus dem Datenspeicher 28 entnimmt, und die erhalten Betriebsdaten 11 vom Device 3 entsprechend anreichert. Die erste SCE 1.1 kann beispielsweise auch einen als Connector-Sensor ausgebildeten Sensor umfassen, der Leistungsdaten der stromführenden Versorgungsleitung oder Leistungsdaten der Datenleitung erfasst und diese Daten beispielsweise als Absolutwerte oder als zeitlich gemittelte Werte im Datenspeicher 28 ablegt.

Die zweite SCE 1.2 ist ein Smart-Device-Übertrager 1.2, der mittels einer nicht näher dargestellten Erfassungseinheit 20.2, ausgebildet als eine Übertragungseinheit, den Datenaustausch mit einer externen Empfangseinheit 27 organisiert, wozu eine mindestens zeitweise Speicherung sowie eine standardgemäße Konvertierung der Empfangsdaten gehören. In dem vorliegenden Ausführungsbeispiel ist die externe Empfangseinheit 27 ein Smartphone, das über eine Bluetooth-Schnittstelle mit dem Smart-Device-Empfänger 7.2 bidirektional Daten austauschen kann.

Die dritte SCE 1.3 in der Datenstrecke 50 ist ein SCE-Thermosensor 1.3 und umfasst eine Erfassungseinheit 10.3 die als Extern-Sensor in Form eines einfachen Widerstandssensors ausgebildet ist und dessen analoge Messwerte in dem SCE-Thermosensor 1.3 digitalisiert und in entsprechenden Programmspeichern standardkonform abgelegt werden.

Weiterhin sind in der Figur 2 mit den Bezugszeichen 10 bzw. 10.1, 10.2 und 10.3 so genannte kombinierte Smart-Connector-Elemente ausgewiesen. In dem Konfigurationsschritt bzw. bei der Systeminitialisierung fragt der erste Smart-Master 6.1 die Protokolldateien des realen IO-Link-Devices 3 ab und übergibt diese intern an das Smart-Device 7.1, wobei insgesamt die Grenzen zw. Smart-Master und Smart-Device durch die schräge, gestrichelte Diagonale symbolisiert wird, dies ist unabhängig von der jeweiligen physikalischen Ausformung. Das in der Datenstrecke 50 erste Smart-Device 7.1 stellt sich gemäß den standardkonformen Protokolleinträgen gegenüber dem zweiten Smart-Master 6.2 der zweiten SCE 1.2 als (erstes) kombiniertes Smart-Connector-Element 10.1 vor, nämlich als ein virtuelles Kombinationsgerät/-device aus induktivem Näherungssensor mit zusätzlichem Datenspeicher 28. Somit erwartet der zweite Smart-Master 6.2 vom ersten Smart-Device 6.1 standardkonforme Betriebsdaten vom Näherungssensor (Device 3) und der ersten SCE 1.1 (SCE-Speicher). In analoger Weise stellt sich das zweite Smart-Device 7.2 gemäß den standardkonformen Protokolleinträgen gegenüber dem dritten Smart-Master 6.3 der dritten SCE 1.3 als (zweites) kombiniertes Smart-Connector-Element 10.3 vor, nämlich als ein virtuelles Kombinationsgerät/-device aus einem induktiven Näherungssensor mit zusätzlichem Datenspeicher 28 sowie einer Übertragungseinheit 26. Somit erwartet der dritte Smart-Master 6.3 vom zweiten Smart-Device 7.2 standardkonforme Betriebsdaten vom Näherungssensor (Device 3), der ersten Erfassungseinheit 20.1 (Datenspeicher 28) und der zweiten Erfassungseinheit 20.2 (Übertragungseinheit 26). Schließlich stellt sich das dritte Smart-Device 7.3 gegenüber dem echten IO-Link-Master 2 als (drittes) Kombinationsgerät/-device aus den vorgenannten Erfassungseinheiten 20.1, 20.2 vor, nämlich einem induktivem Näherungssensor mit zusätzlichem Datenspeicher 28 und einer Übertragungseinheit 26, und zusätzlich aus der eigenen Erfassungseinheit 20.3, die als Widerstandssensor ausgebildet ist.

Wie eingangs beschrieben, ist die Definition eines Smart-Masters wie auch des Smart-Devices insbesondere eine konzeptionelle Zuordnung eines Funktionsumfanges und der hierzu erforderlichen Hardware. In analoger Weise ist die Zuordnung von Komponenten zu einem Smart-Master 6.n, wie der Erfassungseinheit 20.2 zum Smart-Master 6.2, eine konzeptionelle Zuordnung, weil die Erfassungsdaten für die nachfolgende IO-Link-konformer Weiterleitung im Smart-Master 6.2 IO-Link-konform aufbereitet und organisiert werden.

Dieses Trennung von Smart-Master 6.n und Smart-Device 7.n ist durch eine gestrichelte Linie angedeutet.

Somit sieht der Master 2 oder Smart-Master 6.2, 6.3 jeweils ein standardkonformes IO-Device, das allerdings ggf. nur virtuell definiert ist.

Somit ergeben sich auf der Datenstrecke 50 vorliegend vier C/Q-(Leitungs-)Abschnitte, auf denen unterschiedliche Betriebsdaten 11 versendet werden. Betriebsdaten als Request 11.1 werden vom Master 2 versendet und von der jeweiligen Smart-Connector-Einheit 1.3, 1.2, 1.3 zum Device 3 durchgeleitet. In der Respons-Richtung umfassen die nicht-angereicherten Betriebsdaten 11.2 (Response) vom Device 3 nur die Prozess- und Diagnosedaten des als Näherungssensor ausgebildeten Devices 3.

Auf dem zweiten C/Q-Abschnitt werden mit Erfassungsdaten 22.1 aus dem Datenspeicher 28 angereicherte Betriebsdaten 11.3 über das erste Smart-Device 7.1 versendet bzw. können angereicherte Betriebsdaten 11.3 vom zweite Smart-Master 6.2 per Request beim ersten Smart-Device 7.1 angefragt werden. Auf dem dritten C/Q-Leitungsabschnitt werden in analoger Weise angereicherte Betriebsdaten 11.3 kommuniziert, die mit Erfassungsdaten 22.1, 22.2 aus den beiden in Richtung des Devices 3 eingebundenen Smart-Connector-Einheiten 1.1, 1.2 stammen und schließlich werden auf dem vierten C/Q-Leitungsabschnitt zum realen IO-Link-Master 2 angereicherte Betriebsdaten 11.3 kommuniziert, die mit Erfassungsdaten 20.1, 20.2, 20.3 aller Smart-Connector-Einheiten 1.1, 1.2 und 1.3 angereichert sind und auch die Betriebsdaten des realen IO-Link-Devices 3 umfassen.

Jedes als kombiniertes Smart-Connector-Element 10 ausgebildete Smart-Connector-Einheit 1.n wird also gebildet aus einem realen IO-Link-Device 3, sich selbst (1.n) und jeder SCE 1.n-1 bis 1.1, die zwischen dem realen IO-Link-Device 3 und sich selbst in den C/Q-Leitungsabschnitt bzw. den Abschnitt der Datenstrecke 50 eingebunden ist.

Der große Vorteil hierbei ist, dass keine Anpassungen an den beiden realen IO-Link-Systemkomponenten (Master, Device) erforderlich sind.

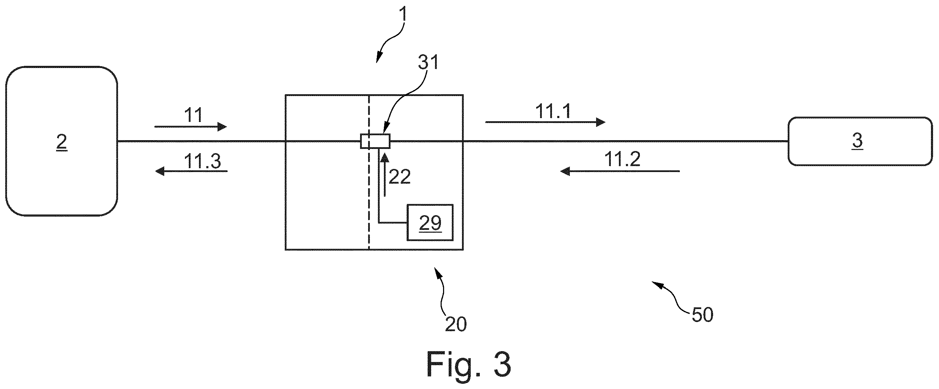

In der Ausführungsform nach Figur 3 ist in die Datenstrecke 50 in eine Smart-Connector-Einheit 1 eingebunden, die einen Mikroprozessor 29 und einen mikroprozessorgesteuerten Datenintegrator 31 umfasst. In dieser Ausführung greift die Smart-Connector-Einheit 1 die C/Q-Datenleitung zwischen Master 2 und Device 3 physikalisch ab.

Hierbei empfängt das Device 3 zunächst den Request 11.1 des Masters 2, antwortet selbst mit der Response 11.2. Anschließend sendet die SCE 1 die Erfassungsdaten 22, die sowohl vom Master 2 als auch vom Device 3 empfangen werden. Hierbei ergeben der Response 11.2 und die Erfassungsdaten 22 den Response 11.3 der SCE 1.

Da hierdurch ein standardkonformes Device 2 einen Fehler des Datentaktes, der Latenzzeit, der Protokolllänge, der Protokollinhalte etc. unterstellen würde, muss für diese Ausführungsform das IO-Link-Device 3 bezüglich der Toleranz oder Missachtung der Erfassungsdaten 11.3 erweitert werden. Analog muss der Master 3 hinsichtlich der Erwartung der Erfassungsdaten 11.3 angepasst werden, dies besteht insbesondere in der Erweiterung der M-Sequenz (S4).

Das Device 3 muss die Erfassungsdaten 22 der SCE 1 ignorieren und anschließend bereit sein, eine neue Anfrage vom Master 2 zu empfangen.

Der Master 2 muss wiederum die verlängerte Antwort durch das Hinzufügen der Erfassungsdaten 22 aus der Kombination der SCE 1 und des Devices 3 erwarten und verarbeiten können. Der Master 2 ist hierzu ausgebildet, um die Erfassungsdaten 22 von den Daten des Devices 3 wieder zu trennen und über unterschiedliche Dienste und/oder Datenpunkte dem jeweiligen Anwender zu Verfügung zu stellen, da die Erfassungsdaten 22 über die IODD des Devices 3 nicht beschrieben sind.

Analog zur Figur 2, ist die SCE 1 ausgebildet, um Erfassungsdaten 22, die im Mikroprozessor 29 aufbereitet wurden, wie beispielsweise Temperatur, Spannung, Strom, getaktet oder bedarfsweise weiterzuleiten.

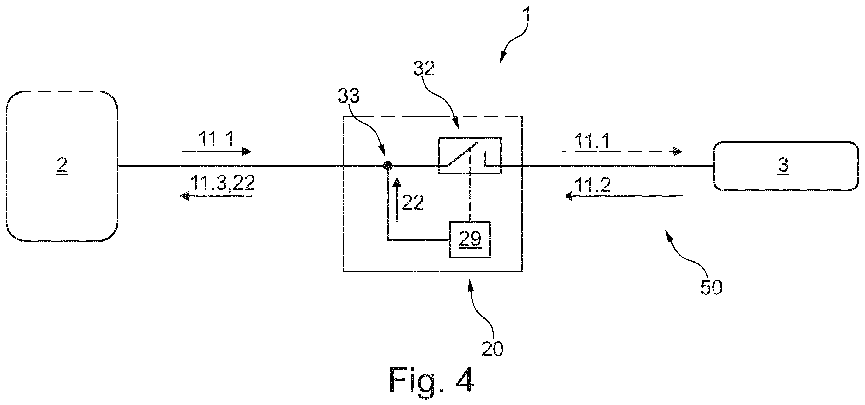

In der Figur 4 ist schließlich eine zur Figur 3 sehr ähnliche, alternative Ausführungsform gezeigt, bei der ein elektronisches, insb. mikroelektronisches Schaltelement 32 vorgesehen ist, das die für die Kommunikation relevante Ader der Leitung 12, insbesondere die C/Q-Leitung auf der Datenstrecke 50 in Richtung des Devices 3 mindestens eine Zeitlang unterbrechen kann (einseitige Übermittlungsphase). Weiterhin ist in der Datenstrecke 50 bzw. in der für die Kommunikation relevanten Ader des Verbindungskabels 12 zwischen dem Master 2 und dem Schaltelement 32 ein Leitungsknoten 33 vorgesehen. Die Erfassungseinheit 20 umfasst einen Mikroprozessor 29 und kann beispielsweise ein oder mehrere nicht dargestellte Datenspeicherelemente umfassen.

Hierbei kann vorgesehen sein, dass der Mikroprozessor 29 und/oder mindestens ein Datenspeicherelement von außen mindestens datenleitend verbunden werden.

Die Unterbrechung erfolgt insbesondere so lange
- (reine) Erfassungsdaten 22 als eigenständige Daten und nicht als angereicherte Betriebsdaten 11.3 zum Master 2 gesendet werden und/oder
- mit Erfassungsdaten 22 angereicherte Betriebsdaten 11.3 zum Master 2 gesendet werden.

Hierzu ist im Unterschied zur Figur 3 zwischen Master 2 und dem Schaltelement 32 in der Regel kein Datenintegrator erforderlich, was den Aufbau stark vereinfacht.

Das Device 3 erhält während dieser einseitigen Übermittlungsphase keinen Request vom Master 2, was für ein IO-Link-Device 3 einen standardkonformen Zustand darstellt. Bei einem geschlossenen Schalter würde allerdings ein standardkonformes IO-Link-Device3 die Erfassungsdaten 22 als Request interpretieren, was durch die Leitungsunterbrechung durch den Schalter verhindert wird.

Wenn die vom Mikroprozessor 8 eingespielten Erfassungsdaten nicht Standardkonformität simulieren (können), ist eine entsprechende Anpassung eines Standard IO-Link-Masters erforderlich. Die Änderung ist erforderlich, weil der Master 2 ausgebildet sein muss, um die verlängerte Antwort mit den Erfassungsdaten aus der Kombination aus der SCE 1 und dem Device 3 zu erwarten und zu verarbeiten.

Hierzu muss der Master 2 beispielsweise die über die SCE 1 erhaltenen Erfassungsdaten 22 von den Daten des Device 3 getrennt und über unterschiedliche Dienste und/oder Datenpunkte dem jeweiligen Anwender zu Verfügung gestellt werden, da diese über die IODD des Devices 3 nicht beschrieben sind.

### Bezugszeichen

1 Smart-Connector-Einheit
   1.1 SCE-Speicher,
   1.2 SCE-Übertrager,
   1.3 SCE-Thermosensor
2 IO-Link-Master, auch kurz Master
3 IO-Link-Device, auch kurz Device
4 Verbindungseinheit, erste
5 Verbindungseinheit, zweite
6 Smart-Master, auch 6.1, 6.2, 6.3
7 Smart-Device, auch 7.1, 7.2, 7.3
8 Mikroprozessor
9 Datenspeicher
10 Smart-Connector-Element, kombiniert
11 Betriebsdaten
   11.1 Request
   11.2 Response
   11.3 angereicherte Betriebsdaten
12 Verbindungskabel
14 Steckerkörper
15 Steckerkörper
20 Erfassungseinheit, auch 20.1, 20.2 und 20.3
22 Erfassungsdaten
23 Steckverbinder
27 Empfangseinheit, extern
28 Datenspeicher
29 Mikroprozessor
30 kombiniertes Smart-Connector-Element
31 Datenintegrator
32 Schaltelement
33 Leitungsknoten
50 Datenstrecke

## Patentansprüche

1. Smart-Connector-Einheit (1) zum Anschluss an einen IO-Link-Master (2) oder zur Nutzung in einer Verbindungsleitung eines IO-Link-Systems zwischen einem IO-Link-Master (2) und einem IO-Link-Device (3), umfassend:
- eine erste Verbindungseinheit (4) und eine zweite Verbindungseinheit (5),
- einen Smart-Master (6, 6.n) und ein Smart-Device (7, 7.n),
- einen Mikroprozessor (8),
- einen Datenspeicher (9) und
- eine Schnittstelle zwischen dem Smart-Master (6, 6.n) und dem Smart-Device (7, 7.n), die zum Senden und Empfangen von Daten dient,
wobei der Mikroprozessor (8) ausgebildet ist, Betriebsdaten (11) IO-Link-standardkonform zwischen dem Smart-Master (6, 6.n) und dem Smart-Device (7, 7.n) auszutauschen,
**dadurch gekennzeichnet, dass**
eine Erfassungseinheit (20, 20.n) vorgesehen ist, die datenleitend mit dem Mikroprozessor (8) verbunden ist,
wobei der Mikroprozessor (8) ausgebildet ist,
- im IO-Link-Standard Erfassungsdaten (22) von der Erfassungseinheit (20, 20.n) in der Smart-Connector-Einheit (1) zu empfangen,
- die Betriebsdaten (11) und die Erfassungsdaten (22) an das Smart-Device (7, 7.n) weiterzuleiten, wobei die Erfassungsdaten (22) mittels des Mikroprozessors (8) in die Betriebsdaten (11) IO-Link-standardkonform eingefügt werden, und
- vom Smart-Device (7, 7.n) die mit Erfassungsdaten (22) angereicherten Betriebsdaten (11) an einen angeschlossenen oder anschließbaren IO-Link-Master (2) oder einen weiteren, benachbarten Smart-Master (6.n+1) weiterzuleiten;
wobei mittels des mit dem Mikroprozessor (8) verbundenen Datenspeichers (9) und gesteuert durch den Mikroprozessor (8) die Aufbereitung und/oder das Einfügung von Erfassungsdaten (22) in die Betriebsdaten (11) IO-Link-standardkonform durchführbar ist.

2. Smart-Connector-Einheit (1) nach Anspruch 1, **dadurch gekennzeichnet, dass** die Erfassungseinheit (20, 20.n) Folgendes ist:
- ein Extern-Sensor zur Ermittlung eines externen, physikalischen Messwerts,
- ein Connector-Sensor (16) zur Ermittlung von internen Messwerten die Smart-Connector-Einheit (SCE) und deren Bauteile betreffend oder/und
- eine Übertragungseinheit zum Datenaustausch mit einer externen Empfangseinheit und/oder Sendeeinheit.

3. Smart-Connector-Element (10), umfassend
- ein physikalisches IO-Link-Device (3) und
- zumindest zwei Smart-Connector-Einheiten (1.n, 1.n-1 ... 1.1) gemäß einem der vorhergehenden Ansprüche, welche auf einer Teillänge einer Datenstrecke (50) von dem physikalischen IO-Link-Device (3) bis zu einem physikalischen IO-Link-Master (2) hintereinander miteinander verbunden sind, wobei jeweils ein Smart-Master (6.1,6.2) mit einem Smart-Device (7.1,7.2) verbunden ist.

4. Verfahren zur bidirektionalen Datenübertragung über mindestens eine Smart-Connector-Einheit (1) in einer Verbindungsleitung eines IO-Link-Systems zwischen einem IO-Link Device (3) und einem IO-Link Master (2),
- wobei die Smart-Connector-Einheit (1) nach Anspruch 1 oder 2 ausgebildet ist, wobei
folgende Verfahrensschritte erfolgen:
- im Betrieb ein zyklischer Austausch von Betriebsdaten (11) in Form von Prozesswerten zwischen einem Smart-Master (6) der Smart-Connector-Einheit (1) und dem IO-Link-Device (3) und ständiger konsistenter Abgleich von Betriebsdaten (11) in Form von Prozesswerten zwischen dem Smart-Master (6, 6.n) und einem Smart-Device (7, 7.n) der Smart-Connector-Einheit (1),
- bei einem Eventereignis eine Abfrage von Betriebsdaten (11) in Form von Diagnosedaten vom IO-Link Device (3) durch den Smart-Master (6, 6.n) und Übertragung der Betriebsdaten in Form von Diagnosedaten an das Smart-Device (7, 7.n),
- im Betrieb zyklischer Austausch der Betriebsdaten in Form von Prozesswerten zwischen dem Smart-Device (7, 7.n) und dem IO-Link Master (2) oder einem weiteren, benachbarten Smart-Master (6.n+1) und
- bei einem Eventereignis die Abfrage von Betriebsdaten in Form von Diagnosedaten vom Smart-Device (7, 7.n) durch den IO-Link Master (2) oder einen weiteren, benachbarten Smart-Master (6.n+1).

5. Verfahren nach Anspruch 4, **dadurch gekennzeichnet, dass** folgende Schritte erfolgen:
- Erfassung von Erfassungsdaten (22) durch die Erfassungseinheit (20, 20.n) und Weiterleitung an den Mikroprozessor (8) im Smart-Master (6) und/oder Speicherung in einem angeschlossenen Datenspeicher (9),
- IO-Link-standardkonformes Einfügen von mindestens einem Teil der Erfassungsdaten (22) in die Betriebsdaten (11),
- Übertragung der Betriebsdaten (11) mit eingefügten Erfassungsdaten (22) an das Smart-Device (7, 7.n) durch den Smart-Master (6, 6.n), und
- Übertragung der Betriebsdaten (11) mit eingefügten Erfassungsdaten (22) an entweder den IO-Link-Master (2) oder einen benachbarten Smart-Master (6.n+1) durch das Smart-Device (7.n).

6. Verfahren nach Anspruch 4 oder 5, **dadurch gekennzeichnet, dass** folgende Verfahrensschritten erfolgen:
A. Konfiguration des mindestens einen Smart-Masters (6, 6.n) für einen zyklischen oder eventabhängigen Betriebsdatenabruf;
B. Bei einer Systeminitialisierung Abfrage einer Konfigurations-Parameterliste des IO-Link-Device (3)
- vom IO-Link-Device (3) durch den benachbarten Smart-Master (6, 6.n) und Übertragung der Konfigurations-Parameterliste an ein mit dem Smart-Master (6, 6.n) verbundenes Smart-Device (7, 7.n) oder
- von dem zumindest einen Smart-Device (7, 7.n) durch einen weiteren, benachbarten Smart-Master (6.n+1) und Übertragung der Konfigurations-Parameterliste an ein weiteres, zugehöriges Smart-Device (7.n+1);
- mehrfache Anfrage nach der Konfigurations-Parameterliste bei einem Smart-Device (7.n) durch den IO-Link Master (2) oder den weiteren, benachbarten Smart-Master (6.n+1), bis diese Parameterliste im Smart-Device (7.n+1) zur Verfügung steht.

7. Verfahren nach einem der Ansprüche 4 bis 6, **dadurch gekennzeichnet, dass** der mindestens eine Smart-Master (6, 6.n) und das mindestens eine Smart-Device (7, 7.n) in einem Dualport-Mikroprozessor realisiert sind.

8. Verfahren nach einem der Ansprüche 4 bis 7, **dadurch gekennzeichnet, dass** der mindestens eine Smart-Master (6, 6.n) und das mindestens eine Smart-Device (7, 7.n) als separate Einheiten ausgeführt sind, die über eine Standardschnittstelle, etwa Ethernet, SPI oder I2C, oder über eine proprietäre Schnittstelle miteinander Daten austauschen.

9. Verfahren nach einem der Ansprüche 4 bis 8, **dadurch gekennzeichnet, dass** mittels der Erfassungsdaten Folgendes erfolgt:
- Erweitern der Betriebsdaten in Form von Prozessdaten,
- Ergänzen des ISDU-Index,
- Trigger im Fall eines Events,
- Ergänzen der Direct Parameter Page (DPP) und/oder
- Erweitern der M-Sequence.

10. Verfahren nach einem der Ansprüche 4 bis 9, **dadurch gekennzeichnet, dass** mittels der Erfassungsdaten (22) eine Ergänzung der Betriebsdaten (11) erfolgt, indem Erfassungsdaten (22) als
- externe physikalische Messwerte, und/oder
- interne Messwerte der Smart-Connector-Einheit und/oder
- Daten von einer Übertragungseinheit (27), insbesondere einer mobilen Übertragungseinheit,
eingefügt werden.

11. Verfahren nach einem der Ansprüche 4 bis 10, **dadurch gekennzeichnet, dass** die Smart-Connector-Einheit (1) verwendet wird, ganz oder vollständig die Rolle eines physikalischen IO-Link-Devices (3) in der Punkt-zu-Punkt-Kommunikation einzunehmen, ohne direkte oder mittelbare Verbindung mit einem physikalischen IO-Link Device (3).

## Claims

1. Smart connector unit (1) for connection to an IO-Link master (2) or for use in a connection line of an IO-Link system between an IO-Link master (2) and an IO-Link device (3), comprising:
- a first connection unit (4) and a second connection unit (5),
- a smart master (6, 6.n) and a smart device (7, 7.n),
- a microprocessor (8),
- a data memory (9), and
- an interface between the smart master (6, 6.n) and the smart device (7, 7.n) that is used to send and receive data,
wherein the microprocessor (8) is designed to exchange operating data (11) between the smart master (6, 6.n) and the smart device (7, 7.n) in accordance with IO-Link standards,
**characterized in that**
a capture unit (20, 20.n) is provided and is connected in a data-conducting manner to the microprocessor (8),
wherein the microprocessor (8) is designed
- to receive capture data (22) from the capture unit (20, 20.n) in the smart connector unit (1) in the IO-Link standard,
- to forward the operating data (11) and the capture data (22) to the smart device (7, 7.n), wherein the capture data (22) are inserted into the operating data (11) in accordance with IO-Link standards by means of the microprocessor (8), and
- to forward the operating data (11) enriched with capture data (22) from the smart device (7, 7.n) to a connected or connectable IO-Link master (2) or to a further, adjacent smart master (6.n+1);
wherein, by means of the data memory (9) connected to the microprocessor (8) and under the control of the microprocessor (8), capture data (22) can be processed and/or inserted into the operating data (11) in accordance with IO-Link standards.

2. Smart connector unit (1) according to Claim 1, **characterized in that** the capture unit (20, 20.n) is:
- an external sensor for determining an external physical measured value,
- a connector sensor (16) for determining internal measured values relating to the smart connector unit (SCE) and its components, or/and
- a transmission unit for exchanging data with an external receiving unit and/or transmitting unit.

3. Smart connector element (10), comprising
- a physical IO-Link device (3), and
- at least two smart connector units (1.n, 1.n-1 ... 1.1) according to one of the preceding claims which are connected to one another in series over a partial length of a data link (50) from the physical IO-Link device (3) to a physical IO-Link master (2), wherein in each case one smart master (6.1, 6.2) is connected to one smart device (7.1, 7.2).

4. Method for bidirectional data transmission via at least one smart connector unit (1) in a connection line of an IO-Link system between an IO-Link device (3) and an IO-Link master (2),
- wherein the smart connector unit (1) is designed according to Claim 1 or 2, wherein
the following method steps are carried out:
- during operation, a cyclic exchange of operating data (11) in the form of process values between a smart master (6) of the smart connector unit (1) and the IO-Link device (3) and a continuous consistent comparison of operating data (11) in the form of process values between the smart master (6, 6.n) and a smart device (7, 7.n) of the smart connector unit (1),
- in the event of an event, a request for operating data (11) in the form of diagnostic data from the IO-Link device (3) by the smart master (6, 6.n) and transmission of the operating data in the form of diagnostic data to the smart device (7, 7.n),
- during operation, cyclic exchange of the operating data in the form of process values between the smart device (7, 7.n) and the IO-Link master (2) or a further, adjacent smart master (6.n+1), and
- in the event of an event, the request for operating data in the form of diagnostic data from the smart device (7, 7.n) by the IO-Link master (2) or a further, adjacent smart master (6.n+1).

5. Method according to Claim 4, **characterized in that** the following steps are carried out:
- capture of capture data (22) by the capture unit (20, 20.n) and forwarding to the microprocessor (8) in the smart master (6) and/or storage in a connected data memory (9),
- insertion of at least some of the capture data (22) into the operating data (11) in accordance with IO-Link standards,
- transmission of the operating data (11) with inserted capture data (22) to the smart device (7, 7.n) by the smart master (6, 6.n), and
- transmission of the operating data (11) with inserted capture data (22) to either the IO-Link master (2) or an adjacent smart master (6.n+1) by the smart device (7.n).

6. Method according to Claim 4 or 5, **characterized in that** the following method steps are carried out:
A. configuration of the at least one smart master (6, 6.n) for cyclic or event-dependent operating data retrieval;
B. during system initialization request for a configuration parameter list of the IO-Link device (3)
- from the IO-Link device (3) by the adjacent smart master (6, 6.n) and transmission of the configuration parameter list to a smart device (7, 7.n) connected to the smart master (6, 6.n), or
- from the at least one smart device (7, 7.n) by a further, adjacent smart master (6.n+1) and transmission of the configuration parameter list to a further, associated smart device (7.n+1);
- repeated request for the configuration parameter list for a smart device (7.n) by the IO-Link master (2) or the further, adjacent smart master (6.n+1) until this parameter list is available in the smart device (7.n+1).

7. Method according to one of Claims 4 to 6, **characterized in that** the at least one smart master (6, 6.n) and the at least one smart device (7, 7.n) are implemented in a dual-port microprocessor.

8. Method according to one of Claims 4 to 7, **characterized in that** the at least one smart master (6, 6.n) and the at least one smart device (7, 7.n) are embodied as separate units which exchange data with one another via a standard interface, for instance Ethernet, SPI or I2C, or via a proprietary interface.

9. Method according to one of Claims 4 to 8, **characterized in that** the following is effected by means of the capture data:
- expansion of the operating data in the form of process data,
- addition of the ISDU index,
- trigger in the event of an event,
- addition of the Direct Parameter Page (DPP), and/or
- expansion of the M sequence.

10. Method according to one of Claims 4 to 9, **characterized in that** the operating data (11) are supplemented by means of the capture data (22) by virtue of capture data (22) being inserted as
- external physical measured values, and/or
- internal measured values of the smart connector unit, and/or
- data from a transmission unit (27), in particular a mobile transmission unit.

11. Method according to one of Claims 4 to 10, **characterized in that** the smart connector unit (1) is used to fully or completely assume the role of a physical IO-Link device (3) in point-to-point communication without a direct or indirect connection to a physical IO-Link device (3).

## Revendications

1. Unité connecteur intelligent (1) pour connexion à un maître IO-Link (2) ou pour utilisation dans une ligne de connexion d'un système IO-Link entre un maître IO-Link (2) et un dispositif IO-Link (3), comprenant :
- une première unité de connexion (4) et une seconde unité de connexion (5),
- un maître intelligent (6, 6.n) et un dispositif intelligent (7, 7.n),
- un microprocesseur (8),
- une mémoire de données (9) et
- une interface entre le maître intelligent (6, 6.n) et le dispositif intelligent (7, 7.n) servant à émettre et recevoir des données,
le microprocesseur (8) étant conçu pour échanger des données de fonctionnement (11) conformément à la norme IO-Link entre le maître intelligent (6, 6.n) et le dispositif intelligent (7, 7.n),
**caractérisé en ce que**
il est prévu une unité de détection (20, 20.n) qui est reliée au microprocesseur (8) par transmission de données,
le microprocesseur (8) étant conçu pour
- recevoir des données de détection (22) de l'unité de détection (20, 20.n) dans l'unité connecteur intelligent (1) conformément à la norme IO-Link,
- retransmettre les données de fonctionnement (11) et les données de détection (22) au dispositif intelligent (7, 7.n), les données de détection (22) étant insérées dans les données de fonctionnement (11) conformément à la norme IO-Link au moyen du microprocesseur (8), et
- retransmettre les données de fonctionnement (7) enrichies de données de détection (22) depuis le dispositif intelligent (11, 7.n) à un maître IO-Link (2) connecté ou pouvant être connecté ou à un autre maître intelligent (6.n+1) voisin ;
la préparation et/ou l'insertion de données de détection (22) dans les données de fonctionnement (11) pouvant être exécutées conformément à la norme IO-Link au moyen de la mémoire de données (9) reliée au microprocesseur (8) et sous le contrôle du microprocesseur (8).

2. Unité connecteur intelligent (1) selon la revendication 1, **caractérisée en ce que** l'unité de détection (20, 20.n) est :
- un capteur externe pour déterminer une valeur de mesure physique externe,
- un capteur de connecteur (16) pour déterminer les valeurs de mesure internes concernant l'unité connecteur intelligent (SCE) et ses composants, et/ou
- une unité de transmission pour l'échange de données avec une unité réceptrice et/ou émettrice externe.

3. Élément connecteur intelligent (10), comprenant
- un dispositif physique IO-Link (3) et
- au moins deux unités connecteurs intelligents (1.n, 1.n-1 ... 1,1) selon l'une quelconque des revendications précédentes, lesquelles sont reliées entre elles les unes à la suite des autres sur une longueur partielle d'une liaison de données (50) depuis le dispositif physique IO-Link (3) jusqu'à un maître physique IO-Link (2), un maître intelligent (6.1, 6.2) étant respectivement relié à un dispositif intelligent (7.1, 7.2).

4. Procédé de transmission bidirectionnelle de données par l'intermédiaire d'au moins une unité connecteur intelligent (1) dans une ligne de connexion d'un système IO-Link entre un dispositif IO-Link (3) et un maître IO-Link (2),
- l'unité connecteur intelligent (1) étant conçue selon la revendication 1 ou 2,
les étapes de procédé suivantes étant effectuées :
- en fonctionnement, un échange cyclique de données de fonctionnement (11) sous la forme de valeurs de processus entre un maître intelligent (6) de l'unité connecteur intelligent (1) et le dispositif IO-Link (1) et un alignement cohérent permanent de données de fonctionnement (7) sous forme de valeurs de processus entre le maître intelligent (6, 6.n) et un dispositif intelligent (11, 7.n) de l'unité connecteur intelligent (3),
- lors d'un événement, une interrogation de données de fonctionnement (11) sous forme de données de diagnostic auprès du dispositif IO-Link (3) par le maître intelligent (6, 6.n) et une transmission des données de fonctionnement sous forme de données de diagnostic au dispositif intelligent (7, 7.n),
- en fonctionnement, un échange cyclique des données de fonctionnement sous forme de valeurs de processus entre le dispositif intelligent (7, 7.n) et le maître IO-Link (2) ou un autre maître intelligent (6.n+1) voisin, et
- lors d'un événement, l'interrogation de données de fonctionnement sous forme de données de diagnostic auprès du dispositif intelligent (7, 7.n) par le maître IO-Link (2) ou un autre maître intelligent (6.n+1) voisin.

5. Procédé selon la revendication 4, **caractérisé en ce que** les étapes suivantes sont effectuées :
- détection de données de détection (22) par l'unité de détection (20, 20.n) et retransmission au microprocesseur (8) dans le maître intelligent (6) et/ou mémorisation dans une mémoire de données (9) raccordée,
- insertion conformément à la norme IO-Link d'au moins une partie des données de détection (22) dans les données de fonctionnement (11),
- transmission des données de fonctionnement (11) avec des données de détection (22) insérées au dispositif intelligent (7, 7.n) par le maître intelligent (6, 6.n), et
- transmission des données de fonctionnement (11) avec des données de détection (22) insérées soit au maître IO-Link (2), soit à un maître intelligent (6.n+1) voisin par le dispositif intelligent (7.n).

6. Procédé selon la revendication 4 ou 5, **caractérisé en ce que** les étapes de procédé suivantes sont effectuées :
A. configuration d'au moins un maître intelligent (6, 6.n) pour une extraction cyclique ou dépendante d'un événement de données de fonctionnement ;
B. lors d'une initialisation du système,
interrogation d'une liste de paramètres de configuration du dispositif IO-Link (3)
- depuis le dispositif IO-Link (3) par le maître intelligent (6, 6.n) voisin et transmission de la liste de paramètres de configuration à un dispositif intelligent (7, 7.n) relié au maître intelligent (6, 6.n), ou
- depuis l'au moins un dispositif intelligent (7, 7.n) par un autre maître intelligent (6.n+1) voisin et transmission de la liste de paramètres de configuration à un autre dispositif intelligent (7.n+1) associé ;
- des demandes multiples de la liste de paramètres de configuration auprès d'un dispositif intelligent (7.n) étant effectuées par le maître IO-Link (2) ou l'autre maître intelligent (6.n+1) voisin jusqu'à ce que cette liste de paramètres soit disponible dans le dispositif intelligent (7.n+1).

7. Procédé selon l'une quelconque des revendications 4 à 6, **caractérisé en ce que** l'au moins un maître intelligent (6, 6.n) et l'au moins un dispositif intelligent (7, 7.n) sont réalisés dans un microprocesseur à double port.

8. Procédé selon l'une quelconque des revendications 4 à 7, **caractérisé en ce que** l'au moins un maître intelligent (6, 6.n) et l'au moins un dispositif intelligent (7, 7.n) sont conçus sous forme d'unités séparées qui échangent des données entre elles par l'intermédiaire d'une interface standard, telle qu'Ethernet, SPI ou I2C, ou par l'intermédiaire d'une interface propriétaire.

9. Procédé selon l'une quelconque des revendications 4 à 8, **caractérisé en ce qu'**au moyen des données de détection, il est procédé à :
- l'extension des données de fonctionnement sous forme de données de processus,
- le fait de compléter l'index ISDU,
- un déclenchement en cas d'événement,
- le fait de compléter la Direct Parameter Page (DPP) et/ou
- l'extension de la M-Sequence.

10. Procédé selon l'une quelconque des revendications 4 à 9, **caractérisé en ce que** les données de fonctionnement (11) sont complétées au moyen des données de détection (22) par le fait que des données de détection (22) sont insérées sous forme de
- valeurs de mesure physiques externes, et/ou
- valeurs de mesure internes de l'unité connecteur intelligent, et/ou
- données provenant d'une unité de transmission (27), notamment une unité de transmission mobile.

11. Procédé selon l'une quelconque des revendications 4 à 10, **caractérisé en ce que** l'unité connecteur intelligent (1) est utilisée pour jouer totalement ou entièrement le rôle d'un dispositif physique IO-Link (3) dans la communication point à point, sans liaison directe ou indirecte avec un dispositif physique IO-Link (3).
